# EUROPEAN PATENT APPLICATION

(11) **EP 2 400 720 A1**
(43) Date of publication of application: **28.12.2011**
(21) Application number: 10167275.6
(22) Date of filing: 25.06.2010
(51) Int. Cl.: H04L 29/08, G06F 17/30

(54) **Query based pre-fetching system**

(71) Applicant: Koninklijke KPN N.V., 2516 CK The Hague (NL)
(72) Inventor: van Steenbergen, Ate, 9737 NN Groningen (NL)

(57) **Abstract**

A pre-fetching system (100;300) for pre-fetching content comprising a content selector (210; 410, 420) for selecting a content item in dependency on a user profile, a content retriever (110; 220; 430) for retrieving over a data connection said selected content item from a content server, and a storage device (130) for storing the content item for later transmission to a content rendering device (180) associated with the user profile in response to receiving a request from the content rendering device for the content item, wherein the content selector comprises a data selector (410) for determining in dependency upon the user profile a server address and a query, a data file retriever (410) for retrieving over a data connection a data file, in response to providing the query to a search interface at the server address, and a parser for parsing (420) said retrieved data file to select said selected content item and to obtain an address of the selected content item, the content retriever (430) being configured for retrieving the selected content item in dependency upon the address of the selected content item.

## Description

### FIELD OF THE INVENTION

The invention relates to a pre-fetching system for pre-fetching content.

The invention relates more in particular to a pre-fetcher system for pre-fetching content comprising a content selector for selecting a content item, a content retriever for retrieving over a data connection said selected content item from a content server, and a storage device for storing the content item for later transmission to a content rendering device.

The invention also relates to a method for pre-fetching content. The invention also relates to a corresponding computer program product and a corresponding system.

### BACKGROUND OF THE INVENTION

During the past years the industry of delivering content over a data network to content rendering devices has grown tremendously. Both the consumption of content on mobile device, e.g., mobile phones, as the consumption on fixed devices, e.g., desktop top computers, set-top boxes and the like, have increased. The demands that content distribution makes on the data network has correspondingly increased.

If the demands made upon a data network, e.g., Internet access network, internet interconnections etc, increase compared to its bandwidth capacity, various problems may arise. For example, the latency may increase, i.e., the amount of time that elapses between making a request for content from a server and receiving back the results. For example, the total download time of a requested content item may increase. In particular, the download time may increase to such lengths that a typical users is not prepared to wait for.

These problems occur both with mobile content rendering devices as with fixed content rendering devices.

The larger requested content is the more sever the problems are. For mobile content rendering devices, a particular problem is that the wireless connection between the device and its base station is often a bottle neck in the communication between the device and a content server.

Various solutions have been proposed to solve these problems.

For example, one may use a caching system for caching content. The caching system comprises an input for receiving a request for a data item from a content rendering device, a storage device and a content retriever. The caching system is configured to determine, in response to receiving the request, if the requested content is stored on the storage device. If the requested content is stored on the storage device, the content is delivered from the storage device to the content rendering device. If the requested content is not stored on the storage device, the content retriever retrieves the content. The retrieved content is transmitted to the content rendering device. The retrieved content is then stored, i.e., cached, on the storage device for later transmission, i.e., when the same or other user request the content item again.

This solution will reduce the pressure on part of the network, e.g., on the Internet backbone, in some circumstances; for example, if a particular content item is frequently requested, and can be fulfilled from the cache. Nevertheless, the inventors have found that this solution still has various drawbacks.

First of all, the caching system does not provide any benefit to the first user who requests the content item. For the first user who requests the content item (or the first user who requests it after it was cleaned from the cache), the content will not be stored on the storage device. The user has to wait until it has been received from the content server, thus incurring latency. Moreover, there is no reduction in the bandwidth requirements made by the request. This is inconvenient, especially, if the request is made during those times of the day wherein network pressure is highest.

The occurrence of being the first user is not unlikely, since using a data network, i.e., the internet, which caters to a large variety of tastes, gives rise to a particular long tail. The long tail phenomenon is the situation that a comparatively large part of the total number of content requests is for relatively unpopular items. That is a comparatively large part of requested content will not be requested again soon, at least not by the relatively smaller part of the network which is behind the caching system.

Another approach to the problem could be to employ pre-fetching of content. The pre-fetcher could retrieve content form a content server before the content was requested by the user. If the user later happens to make a request for the content it would already be stored.

The inventors have observed however, that pre-fetching also has several disadvantages. Using pre-fetching however, one has little assurance that any particular user will ever request the pre-fetched content. One runs the risk of pre-fetching large quantities of content without gaining a comparable advantage. For example, with caching one is at least sure that at one point at least one user was interested in the content. Accordingly, there is a chance that other users may have similar interests. Furthermore, the pre-fetcher has the problem that not all content will be accessible to the pre-fetcher.

### SUMMARY OF THE INVENTION

It would therefore be of advantage to have a system which reduces bandwidth demands without also incurring latency for the first user.

The invention provides a pre-fetching system for pre-fetching content. The pre-fetcher system for pre-fetching content comprises a content selector for selecting a content item in dependency on a user profile, a content retriever for retrieving over a data connection said selected content item from a content server, and a storage device for storing the content item for later transmission to a content rendering device associated with the user profile in response to receiving a request from the content rendering device for the content item. The content selector comprises a data selector for determining in dependency upon the user profile a server address and a query, a data file retriever for retrieving over a data connection a data file, in response to providing the query to a search interface at the server address, and a parser for parsing said retrieved data file to select said selected content item and to obtain an address of the selected content item. The content retriever is configured for retrieving the selected content item in dependency upon the address of the selected content item.

The content selector selects a content item for pre-fetching in dependency on a user profile. This achieves two goals, first the pre-fetching is explicitly linked to a user, e.g. to a user's preferences or needs, thus reducing the likelihood that content would be pre-fetched in which the user has no interest. Basing pre-fetching decisions on general statistics is less efficient, especially in the presence of long-tail like browsing behavior, than basing pre-fetching on a user profile.

Some ways of offering content in a network has been found to be more suitable for pre-fetching than others. For example, pre-fetching works quite well if the user often accesses a particular top-level index page of a website. For example, a data mining application may observe that a particular URL is often accessed around a particular time. For example, a user may access a new site around 19:00. The pre-fetcher can then access that page some time in advance, say around 18:00. The content items which are on that page are then pre-fetched and pre-processed. Note, that the data file itself need not be cached, hence if the data wile were updated the user would not receive the same data file. It has been observed that content items are updated less often than the data file which indexes them.

Although having this type of pre-fetching already reduces bandwidth requirements and latency (if combined with pre-processing), it has been observed that the method has limitations. Content which is not indexed by the server on an index page is not accessible during the pre-fetching in this manner. An example of this kind of content is content which is only accessible through a search interface. This problem is aggravated by the long tail phenomenon. A relatively large part of requested content is only requested by few or even only a single user. This type of content cannot efficiently be indexed on a top-level page, which is to be used by many people.

The embodiment presented above mitigates this problem. A query is provided to a search interface on a server. As a result a data file is downloaded which depends on that query. Accordingly the resulting data file is much better related to the type of content the user is likely to request later. Content items which are not indexed on other pages may nevertheless be accessible through a search interface.

The inventor has observed that especially with currently popular websites featuring a large number of movie clips, existing caching solutions tend to break down. He has identified that this seems to be due to two reasons. First is the mentioned long-tail phenomenon, as a result of which caching is not an effective method to reduce bandwidth requirements; the first requestor on a particular sub-network, may well be the only requestor of some content item. Second, a lot of content, especially on the mentioned movie clip websites is only accessible behind a search interface, this content would not be cached at all.

The content selection is divided into two parts. First a data file is obtained by entering a query at a search engine, then, based on the data file, content is selected for pre-fetching. As a result items become available which otherwise may not have been available for pre-fetching. Moreover, since the query depends on a user profile it is likely that it will be later selected by the user.

The content selector selects content items before they are requested. The content items are then retrieved and stored also before they are requested. When the user makes his request, he can immediately be served by transmitting the content item from the storage device. The data file is a digital data file.

The pre-fetching system according to the invention has several advantages.

Consider a user who requests, using his content rendering device, from the pre-fetching system a particular content item for the first time. That user will enjoy a better experience. The content he requested can be delivered from a local storage device instead from a remote content server, thus reducing latency.

Comparing this to the caching system there is an advantage for the first user to request a particular content item. In the caching system, the first user would not be served from local storage and he would have to wait until the original content item was retrieved from the content server.

In an embodiment, the pre-fetching system comprises an interceptor for receiving a request from the content rendering device for the content item and in response transmitting the compressed content item to the content rendering device.

The interceptor allows the pre-fetching system to be mostly transparent to the user during operational use. If the user happens to make a request for content that was pre-fetched, he will receive it after a short time, since the transmission from the content server to the pre-fetching system has been removed. Moreover, the bandwidth requirements on the network between the pre-fetching system and the content server are reduced. This benefits a user who makes other demands on the network concurrent with the requesting of the content item by the user associated with the user profile, since the other demands do not need to compete for bandwidth with the requested content item.

If the user makes a request for content that, as it happens, was not pre-fetched, then the request will simply be forwarded to the content server and handled in the usual manner, e.g., retrieved over the data connection.

The interceptor may be integrated into a proxy server.

In an embodiment, the user profile comprises a group of server addresses, comprising at least one server address and a group of queries, comprising at least one query, and determining in dependency upon the user profile a server address and a query comprising selecting a server address from the group of server addresses and a query from the group of queries.

One way to base pre-fetching on a user profile, is to list a URL-query combination in the user profile. For example, a user may select queries which are to be used to particular URLs.

In an embodiment, the pre-fetching system comprises a pre-processor for transforming said retrieved content item by applying a content processing algorithm. The storage device is configured for storing said transformed content item for later transmission to the content rendering device associated with the user profile in response to receiving a request from the content rendering device for the content item.

Previously content was accessed by a comparatively homogeneous group of devices, but the type of devices currently used for Internet access has proliferated. For example, previously a web page would typically be accessed by a desktop computer, having a reasonable large display. Although computers differed, most of them shared a sufficient number of characteristics for a web designer to optimize his content for.

Currently, however, devices used for accessing internet have diverged. On the one hand, a large number of mobile devices are used. Those mobile devices show every conceivable intermediate level of quality, in terms of resolution, speed, color etc. On the other hand, devices such as large television sets, e.g., capable of full-HD content may be equipped for Internet access as well.

It is a problem that different devices need different types of content for optimal performance. However since the number of devices is growing, the number of formats which would need to be offered is also increasing. For example, the same content item would ideally be available in a large variety of increasing and decreasing quality levels and size. Needless to say, not all web operators are capable of accommodating this desire.

The preprocessor can optimize the content item for the content rendering device. For example, if the content device needs a higher quality it may upscale the content. If the content device needs a particular format, it may transcode the content item. An example of transcoding is to convert MPEG-2 or H.264 to MPEG-4.

The preprocessor may also transrate the content item; Transrating is the encoding of a content item at a lower bit rate so that the content item can be transmitted with a lower bandwidth requirement. In particular, the transcoding may comprise transrating. Examples of bit rates include: 64, 128, 256 and 512 kbps. To reduce size of a content item it may be transrated from a higher bit rate to a lower bit rate.

Since the content item is pre-fetched, the preprocessor has more time to perform the transforming. This brings transformation into reach which otherwise would take too long to do on the fly.

In an embodiment, the preprocessor is configured for transforming the retrieved content item into a content item having a smaller storage space requirement than the retrieved content item by applying a content compression algorithm.

For example, content items such as video content may be compressed, using a video compressing algorithm. By reducing the size of the content, e.g., the size, expressed e.g. in bytes, that would be needed if the content were to be stored on a storage device, the demand the content makes on a data network is reduced.

A problem with compressing content before it is downloaded, is that it depends on the cooperation of the operator of the content sever on which the content item is stored. For example, the operator could make the video available in various sizes using increasingly more aggressive compression. However, this imposes a burden on the operator, who may not be interested in offering multiple versions. Moreover, the compression algorithms that are most effective in reducing the size of content item are typically lossy compression algorithms. Although loss algorithms may reduce size to a large extend they may also reduce the quality of the content item. An operator may not be prepared to use lossy algorithms.

A possible improvement is to move the compression of the content from the content server to an intermediate server, e.g., a proxy server, an ISP, etc.

The content is delivered in compressed form, or at least in a more compressed form than as it is stored on the content server; this reduces the bandwidth demands on the connection between the content rendering device and the pre-fetching system, it also reduces latency. Finally, the user need not wait for the pre-fetching system to compress the content, since this has already happened.

It is known the compression may take a long time. Moreover, the amount of compression that can be achieved depends on the amount of time that it may take. In particular compression of video may take a long time. Recompression, i.e., receiving a content item in a first compressed format, uncompressing the content, and compression the content item into a second compressed format, wherein the second compressed format typically produces smaller sized content item may take even longer. The procession time and/or processing capacity needed for recompression of video is especially problematic, however the same problem may arise, e.g., with web-pages which comprise many large images.

If a content item is pre-fetched there is more time available for processing it, e.g., compressing it. The time between the moment the content item is pre-fetched and the moment it is requested may be in the order of hours or even days. Thus allowing the use of algorithms with a higher compression efficiency, or the use of (re)compression algorithms were otherwise none would be used.

For example, a video compressed using the H.264/MPEG-4 AVC format may be recompressed into MPEG-4 Part 2 format.

The content is digital content and may comprise any one of video, still image, audio, text etc. For different types of content a different type of compression may be used. For example, audio may be compressed using mp3, wma, ogg vorbis etc; still image may be compressed using 'JPEG'; text may be compressed using the Lempel-Ziv compression algorithm.

The content selector may select content for pre-fetching in a variety of ways and using different criteria. For example, the content selector may obtain from the user profile a URL of a content item. For example, the URL may be of a web page which is accessed frequently. The user profile may be created using direct input from the user. The user profile may also be obtained by analyzing past data access behavior. The user profile may be a digitally stored file.

The content retriever may retrieve the content, e.g., by downloading over a data connection, e.g., the internet. The data connection will typically use a wired connection but the retrieving may also involve wireless connections.

The content server may comprise a web server for serving content. The content server may also provide content over a different interface than http, e.g., ftp, etc.

The storage device may include magnetic storage, e.g. hard disks, memory, e.g. flash memory, optical storage, e.g., optical disc storage, e.g. DVD's, and the like.

The content rendering device may be a computer, a set-top box, mobile phone, mobile content device, mp3 player, etc.

The user profile comprises information for selecting content items that are likely to be requested in the future by a particular content rendering device, i.e., by the content rendering device associated with the user profile. The user profile may comprise more information, for example, in an embodiment the user profile comprises a quality indication, and the preprocessor is configured for transforming the retrieved content item into the compressed content item in dependency upon the quality indication. For example, the user profile may comprise a target, e.g., a target bit-rate, target frame rate, target resolution, target compression algorithm, etc, the preprocessor begin configured to compress to meet the target. If the first compression format is below the target, the video will not be compressed or further compressed.

In an embodiment, the retrieved content item comprises a compressed video, the compressed video being compressed according to a first compression format, and wherein the transforming of the retrieved content item comprises recompressing the compressed video to obtain the compressed content item comprising a compressed video being compressed according to a second compression format.

Video content is often available in a compressed format. Nevertheless, the compression will be optimized for a certain viewing experience. A video which is compressed for viewing on a big-screen full-HD television is typically compressed much less than a video which is compressed for use on a mobile content rendering device. As a matter of fact the video compressed according to the first format may still be too large for downloading, e.g., to a mobile phone. A solution is to recompress the video. For example, the video may be uncompressed and then recompressed according to the second format.

The second compression format may have any one of a lower bit rate, a lower frame rate, a lower resolution. The compression algorithms of the first and second format may be different or the same. Compression format may use any one of DivX, Xvid, h.264, QuickTime, and the like.

A reduction in quality which may be associated with using the second format may not be noticeable on the. For example, were a reduction in quality would have been visible on a high-end television, e.g., a full-HD television, the reduction may not be noticeable on a mobile content rendering device. For example, intended content rendering device may have a lower display resolution than a resolution of the content item in the first format. The second format may reduce the resolution to the resolution of the content rendering device.

In an embodiment, the pre-fetching system is configured for transmitting the compressed content item to the content rendering device over a wireless data connection.

Compression of video reduces the bandwidth demands and may thus reduce problems which are related to restricted bandwidth. However, for content rendering devices which receive their content over a wireless connection the bandwidth is relatively more restricted. Applying the invention in this situation gives a relatively larger improvement.

In an embodiment the content rendering device is a mobile phone.

In an embodiment, the pre-fetching system comprises a profile manager, the profile manager being configured with a digital user interface for receiving from a user the user profile associated with the content rendering device.

In this embodiment the user can directly set his user profile. For example, the user may run a user profile editing program on his content rendering device to create a user profile. The created user profile may be sent over a network to the profile manager. As a further example, the profile manager may comprise a web server configured with the user interface. The user could edit his user profile directly via that web server. The profile manager stores and/or forwards the user profile as needed.

A user profile may also be created, e.g., by the profile manager, without user input, e.g., by relying on data mining. The user profile may also be created in dependency both on user input and on other information, e.g., the user's browsing history.

An aspect of the invention concerns a method for pre-fetching content, The method comprises selecting a content item in dependency on a user profile, retrieving over a data connection said selected content item from a content server, and storing said retrieved content item on a storage for later transmission to a content rendering device associated with the user profile in response to receiving a request from the content rendering device for the content item. Selecting a content item comprises determining in dependency upon the user profile a server address and a query, retrieving over a data connection a data file, in response to providing the query to a search interface at the server address, and parsing said retrieved data file to select said selected content item and to obtain an address of the selected content item. Retrieving over a data connection said selected content item is in dependency upon the address of the selected content item.

In an embodiment of the method according to the invention transforming said retrieved content item comprises transforming said retrieved content item into a compressed content item having a smaller storage space requirement than the retrieved content item.

In an embodiment of the method according to the invention, the method comprises receiving a request from the content rendering device for the content item and in response transmitting the transformed content item to the content rendering device. The content rendering device and the pre-fetching system may be implemented as an electronic device. In particular any one of the content selector, content retriever, storage device, data selector, data file retriever, parser may be implemented as an electronic device. Different components of the pre-fetching system may be combined into a single device or implemented in multiple devices.

The content rendering device may comprise a mobile electronic device. The content rendering device may comprise, e.g., mobile phone, set-top box, computer, and the like.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc.

In a preferred embodiment, the computer program comprises computer program code means adapted to perform all the steps of a method according to the invention when the computer program is run on a computer. Preferably, the computer program is embodied on a computer readable medium.

For completeness, it is mentioned that US Patent 7,130,890, 'Method and system for adaptively pre-fetching objects from a network', which is incorporated herein by reference, discloses a system for pre-fetching objects from a network. The patent is referred to below as patent '890.

The system discloses a proxy server. The proxy server includes a local cache, a pre-fetch engine, a data mining engine and a plurality of access logs.

The data mining engine analyzes data contained in the plurality of access logs generated within the proxy server. Based on the analysis, the data mining engine determines what objects to pre-fetch from a content server into the local cache with the pre-fetch engine. What the pre-fetch engine pre-fetches can be based on links present in an already requested web page, on patterns of recent accesses to web pages, streaming media objects, on user profiles, on past trends.

The access logs contain information about the clients whose requests to the content server has been proxied by the proxy server and served either from its dedicated local cache or from the content server. For each request, various details such as the URL requested, whether it was already present in the local cache (cache hit), the date and time of the access, number of bytes transferred and type of request from the client are placed in the logs. The logs may be generated by appending the details of requests collected in the proxy server's memory to the current file for storing access logs. The pre-fetching algorithms can use a variety of predetermined criteria in order to make the predictions.

Based on an analysis of historical access data, the data mining engine can predict the content that will probably be accessed in the near future. For example, data mining techniques applied to the access logs might reveal that web pages, audio and video archives of the past day's news are accessed heavily from the news.com web site between 7 and 9 AM. To handle these accesses fast, the data mining engine might issue pre-fetch instructions for this content between 6 and 7 AM. These pre-fetches might be generated in a web-crawler which pre-fetches the top-level pages from news.com and follows the hyperlinks in them, issuing pre-fetches for each.

The proxy server is coupled to a client system and the content server. Network traffic from the client system for the content server goes through the proxy server. Proxy servers are available for common network services. For example, an HTTP proxy is used for Web access, and an SMTP proxy is used for e-mail.

There are a number of differences between the invention and the disclosure of patent '890.

Patent '890 does not use a data file retriever for retrieving over a data connection a data file, in response to providing the query to a search interface at the server address. This difference allows the pre-fetcher system access to a much larger amount of content. The efficiency of the system is thus increased. There is a larger chance of having a hit, i.e., having an intersection between the content which was pre-fetched and the content which is actually requested. By contrast, much content is hidden from the system of '890, and will accordingly not be pre-fetched.

The technique of patent '890 does not reduce the bandwidth demands on the link between the device that makes a request for content and the proxy that delivers the content. Compression in not used in patent '890, hence what the user receives is a locally cached copy which is otherwise the same as the copy stored on the originating content server. However, the connection between the device making the request and the proxy server is important since it often has more restrictions on bandwidth, especially if that connection is wireless.

### BRIEF DESCRIPTION OF THE DRAWINGS

The invention is explained in further detail by way of example and with reference to the accompanying drawings, wherein:
Figure 1 is a block diagram illustrating an embodiment of a pre-fetching system,
Figure 2 is a block diagram illustrating a pre-fetcher,
Figure 3 is a block diagram illustrating a pre-fetcher system,
Figure 4 is a block diagram illustrating a pre-fetcher,
Figure 5 is a block diagram illustrating a user profile,
Figure 6 is a block diagram illustrating operational use of a pre-fetcher,
Figure 7 is a flow chart illustrating a method of pre-fetching a content item,
Figure 8 is a flow chart illustrating a method of pre-fetching a content item,

Throughout the Figures, similar or corresponding features are indicated by same reference numerals.

### List of Reference Numerals:

- 100: pre-fetching system
- 110: pre-fetcher
- 120: pre-processor
- 130: storage
- 140: interceptor
- 150: server
- 160: ISP
- 170: profile manager
- 180: content rendering device
- 210: content selector
- 220: retriever
- 300: pre-fetching system
- 410: selector
- 420: parser
- 430: retriever
- 500: user profile
- 510: group of URLs
- 520: group of queries
- 530,540: URL-query combination
- 610: URL1
- 620: Data file
- 625: URL2
- 630: URL2
- 640: Content item
- 700: method of pre-fetching a content item
- 710: select content item
- 720: retrieve content item
- 730: compress retrieved content item
- 740: store compressed content item
- 750: receive a request for a content item
- 760: transmit compressed content item
- 770: retrieve content item
- 800: method of pre-fetching a content item
- 810: access use profile
- 820: determine server address and query
- 830: compress retrieved data item
- 840: provide query to search interface
- 850: retrieve a data file
- 860: parse data file
- 870: select content item
- 880: obtain address of content item

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

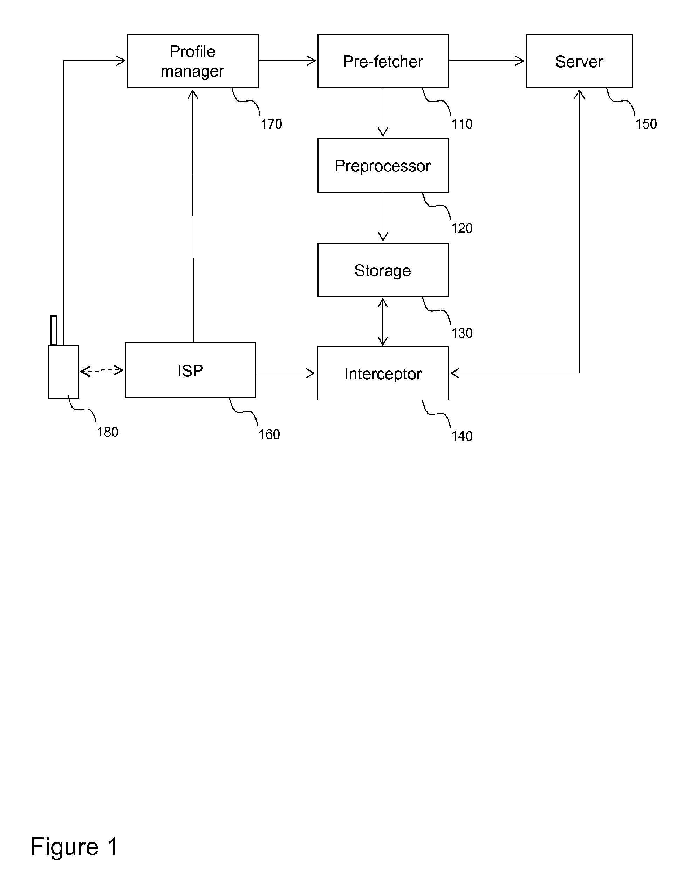

Figure 1 illustrates in a block diagram a pre-fetching system 100 according to the invention. Some of the data dependencies between various elements of pre-fetching system 100 are illustrated by arrows.

The figure shows a content rendering device 180. Content rendering device 180 is shown as a mobile phone, but the system may be employed using any content rendering device. Content rendering device 180 is connected with a data network, in this case, through an ISP 160. It is understood that what is labeled as ISP may in practice comprise various devices, which cooperate to enable access to the data network by content rendering device 180. It is noted that the data network may be the Internet. For example, in case content rendering device 180 is a mobile phone, ISP 160 may comprise a base station and the like to provide wireless access to content rendering device 180. A connection between content rendering device 180 and ISP 160 has been indicated in the figure, with a dashed line. If content rendering device 180 is a mobile device, the dashed line is preferably a wireless connection. The dashed connection need not necessarily be a data connection, but may also be, e.g., an ADSL connection, etc. We will also refer to content rendering device 180 as client 180.

Content rendering device 180 is configured to make content requests from ISP 160. For example, content rendering device 180 may request a particular web page over the http protocol using a web browser. For example, content rendering device 180 may make a request for content from a content server 150. At least part of the requests made by content rendering device 180 to ISP 160 are routed to further devices in the data network, such as server 150, which are remote from ISP 160. Server 150 and ISP 160 are connected through a data network.

Server 150 may comprises a content server, a web server, etc.

Server 150 may also comprises a streaming server for streaming of content items. For example, server 150 may comprise a RTSP server. RTSP stands for 'Real Time Streaming Protocol ', which is a network control protocol designed for use in content delivery systems to control streaming media servers. The protocol is used to establish and control media sessions between end points, between server 150 and client 180. Client 180 may issue media control commands, such as play and pause, to facilitate real-time control of streaming of a content item from server 150 to client 180.

Pre-fetching system 100 further comprises a profile manager 170. Profile manager 170 manages at least one user profile associated with the user of content rendering device 180 and/or content rendering device 180 itself. The user profile may be based on various kinds of data. Profile manager 170 may store the user profile. Profile manager 170 may configure the user profile based on a history of content requests of content rendering device 180, e.g., using data mining, e.g. as described in US Patent 7,130,890. Profile manager 170 may configure the user profile based on direct input of content rendering device 180, or even receive the user profile from content rendering device 180.

Profile manager 170, is shown connected with content rendering device 180, this indicates that one possibility for profile manager 170 to create the user profile is to receive user input from content rendering device 180. For example, the user may supply to profile manager 170, either via content rendering device 180, or via some other device, e.g., a computer, a list of URL's, i.e., a particular kind of server addresses, for which he wants to initiate pre-fetching. For example, the user may supply profile manager 170 with the top-level page of a web-site, for pre-fetching of the content items which appear on that page.

The user profile may indicate the type of content which is to be pre-fetched, and/or which is to be excluded from pre-fetching. For example, the user profile may comprise an indication for indicating to pre-fetcher 110, that images are not to be pre-fetched. For example, the user profile may explicitly exclude a particular format from pre-fetching, e.g., JPEG images. On the other hand, the user profile may comprise an indication for indicating to pre-fetcher 110, that the pre-fetching only applies to a particular kind of content format, e.g., only movies clips are to be pre-fetched, or more particularly, that only Quicktime movies are to be pre-fetched. For example, the user profile may indicate that pre-fetching is only to be used to content which will be processed by a particular codec installed upon client 180.

The user profile may further indicate the type of device which is associated with the user profile. For example, a user profile may indicate that client 180 is any one of a mobile phone, a set-top box, desk top computer etc. The user profile may further indicate the particular kind or model. In addition, or alternatively, the user profile may indicate the capabilities of the client associated with the user profile. For example, it may indicate its download and upload capabilities, the resolution of its screen, its processing power, its storage capacity, an amount of storage dedicated to content caching etc. The user profile may indicate at what times the device is used most often, and for what kind of content.

The user profile may indicate the desired quality level of a content item. The quality level may be indicated per type of content item, i.e., images and movies may have a different desired quality. The desired quality level may be dependent upon the time of day. For example, a person may indicate a lower quality level during daytime, when that particular user is most interested in low latency, but after office hours he may be more interested in high quality, which he may indicate with a higher desired quality level after say 1800. The latency that he experiences as a result of a higher desired quality level would be lower, but the quality would be higher.

The desired quality level indicated in the user profile may indicate any one of a desired bit rate, desired encoding, desired resolution etc. Pre-processor 120 processes in dependency upon the indications in the user profile.

It is noted that the user profile may contain a global section, comprising preferences, indications, e.g., such as described herein, which apply by default to all servers 150, e.g., to all websites. It has been found however to be advantageous for a user profile to comprise also dedicated sections, which apply only to a particular server 150, or set of servers. For example, a section of the user profile may contain settings which may overrule global settings, but which only apply to a particular content server.

For example, a user may have dedicated settings for a particular content server which he uses frequently for downloading movie clips. For example, he may use that server primarily for entertainment purposes and he may find that latency is of overriding importance. On the other hand, there may be websites for which it would be unacceptable to run the risk of out-of-date content. For example, a user may use the services of a server 150 for receiving up-to-date business information, typically for a fee; caching of that information would reduce the value of that information. The user may have a section in his user profile which indicates that no caching, including pre-caching, of any kind is to be used for that server.

It has been found advantageous, to construct the user profile directly from information received from the user, instead of relying on data mining. Many of the types of information described above cannot be obtained by data mining. For example, data mining would not be able to distinguish between business use and entertainment use, whereas the distinction may be critical.

Profile manager 170, is also shown connected with ISP 160, this indicates that a further possibility for profile manager 170 to create the user profile is to receive a copy of previous content requests which originated from content rendering device 180. For example, the ISP 160 may supply a list of all content requests or all made in a past time frame, e.g., the past two weeks. Based on the historic data profile manager 170 may create a user profile. For example, profile manager 170 may determine the content request, e.g. URL, which was requested most frequently and record it in the user profile.

Profile manager 170 may, but need not, use both types of information to establish a user profile. Reference is made to patent '890 for further examples of content selection for use with a pre-fetcher. Although figure 1 shows profile manager connected to content device 180 and to ISP 160, profile manager does not need both of them. In fact profile manager, may obtain the user profile from another source altogether, e.g., from a computer different from content rendering device 180, e.g., operated by the same user.

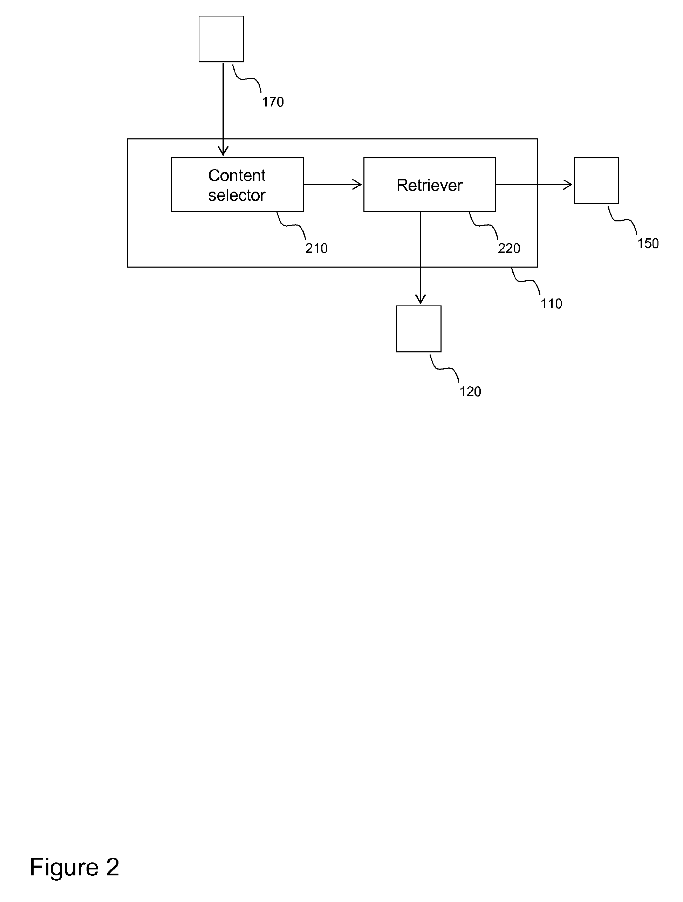

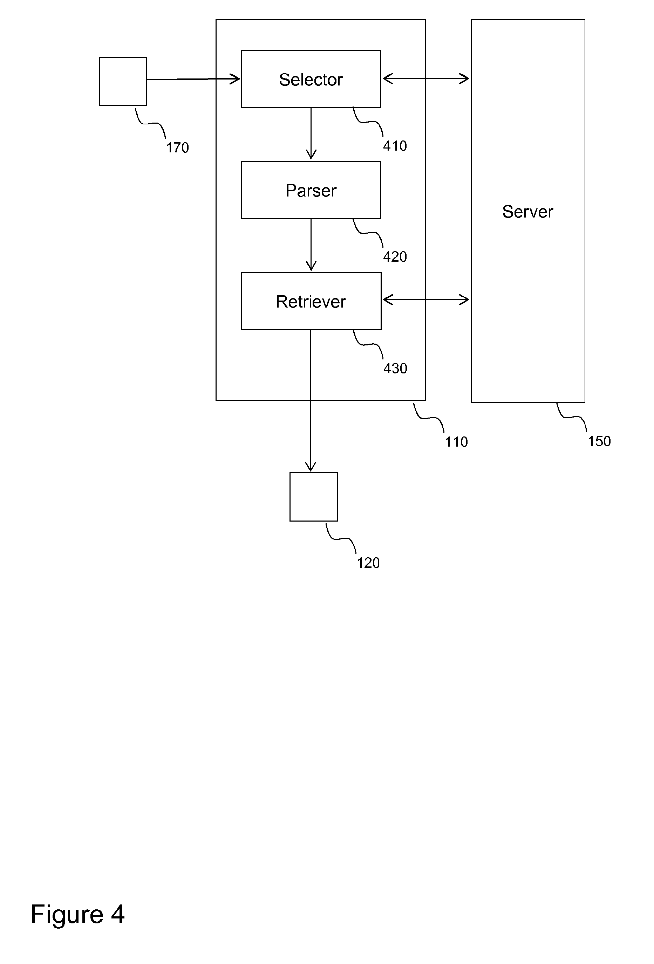

In this embodiment, pre-fetching system 100 comprises a pre-fetcher 110. Pre-fetcher 110 comprises a content selector 210 for selecting a content item in dependency on a user profile, and a content retriever 220 for retrieving over a data connection said selected content item from a content server. Pre-fetcher 110 together with content selector 210 and retriever 220 are further illustrated in Figure 2 and Figure 4. Figure 1 and 2 show content selector 210 and retriever 220 integrated in a pre-fetcher, however, a system could also comprise a content selector 210 and retriever 220 as separate systems, possibly, located in remote locations, and communicating over a data connection.

Content selector 210 receives from profile manager 170 a user profile. In dependency on the user profile, content selector 210 selects a content item. For example, content selector 210 may select a URL from content selector 210 which is frequently accessed, and presumably also frequently updated. Content selector 210 may also make predictions about future content request. The content item selected by content selector 210 is passed to retriever 220 for retrieval over the data network, from a content server, e.g., content server 150.

Pre-fetching system 100 further comprises a preprocessor 120 for transforming said retrieved content item by applying a content processing algorithm. For example, pre-processor 120 may transcode the content, e.g. reformatting the content from a first format into a second format.

In a preferred embodiment, pre-processor 120 is configured to transform the retrieved content item into a content item having a smaller storage space requirement than the retrieved content item by applying a content compression algorithm. For example, pre-processor 120 may identify if the retrieved content item is in a compressed format, e.g., by testing the content item against a list of possible compression formats. If the content item is compressed, pre-processor 120 may uncompress the content item by applying the corresponding uncompressing algorithm. If the content item is uncompressed, (possibly after uncompressing), pre-processor 120 may compress the content item. If the retrieved content item was compressed according to a first format, pre-processor 120 may compress the content item according to a second compression format, to decrease the size of the content item.

Pre-processor 120 may be configured for other operations. For example, pre-processor 120 may increase the quality of the content item by applying up scaling algorithms, e.g., to increase the resolution or frame rate of video content.

The transformed content item, e.g., the compressed content item is stored on storage device 130.

Content rendering device 180 is also connected to an interceptor 140. Shown in Figure 1 is the situation wherein interceptor 140 is connected to content rendering device 180 via ISP 160. However, content rendering device 180 may also be connected to ISP 160 via interceptor 140. Interceptor 140 may also be integrated in interceptor 140. At least part of the content requests made by content rendering device 180 are routed through interceptor 140. For example, ISP 160 routes the request through interceptor 140.

Upon receiving a request for a content item, interceptor 140 determines if the content item is stored in storage 130. If so, interceptor 140 retrieves the content item from storage 130 and forwards it to content rendering device 180, possibly through ISP 160. The content item that is retrieved from storage 130 has been transformed, e.g. compressed, by pre-processor 120.

If interceptor 140 determines that the content item is not stored in interceptor 140, it initiates a retrieval of the content item from server 150. Such a retrieval may be done directly by interceptor 140, but interceptor 140 may also use an intermediary. For example, interceptor 140 may instruct pre-fetcher 110 to fetch the content item.

There are a number of options on how to forward the directly retrieved untransformed content item. Interceptor 140 may forward the content item directly, so as to reduce waiting time for the user, which would be incurred while the content item is processed. On the other hand pre-processor 120 may do the processing before the content item is forwarded to content rendering device 180. If the content item is compressed this reduces transmittal time. For example, interceptor 140 may be configured with a size parameter. If the size of the content item is less than the size parameter it is forwarded by interceptor 140 to content rendering device 180 without first compressing it. If the size of the content item is larger than the size parameter it is forwarded by interceptor 140 to content rendering device 180 after first compressing the content item. In the latter case the compressing may be done by preprocessor 120.

In an embodiment, a possible sequence of operating steps of the system shown in Figure 1 may be as follows.

A user of content rendering device 180 enrolls for the pre-fetching system, e.g., by generating a user profile on profile manager 170. The user may use a web-based interface to create the user profile. The user indicates a particular website for which the user wants pre-caching. For example, the user indicates a particular news web page. The news page contains news stories which are regularly updated. The news page is hosted by a web server on server 150. The page is indicated as an URL, but may also be indicated as an IP address.

Pre-fetcher 110 retrieves the user profile and retrieves the URL indicated by the user. The news page is retrieved, including all the content items that are embedded in the page. For example, the page includes any one of embedded pictures, embedded video, embedded audio etc. The embedded content is also retrieved by pre-fetcher 110.

Pre-processor 120 perform processing on the page and/or content received by pre-fetcher 110. An embedded video is recompressed into a smaller format. The page and all compressed embedded content items are stored in storage 130.

At some later point, the user of content rendering device 180 decides to browse the Internet. In the course of his internet session, the user browses to the webpage he indicated earlier in his user profile. The request for this page and/or the request for any of its embedded content items are forwarded to interceptor 140. Interceptor 140 determines that a request is made for a content item that was processed, e.g., compressed, and stored on storage 130. In one embodiment interceptor 140 simply retrieves the entire page, along with any content embedded therein, and forwards it to content rendering device 180. In a more advanced embodiment, interceptor 140 only forwards embedded content from storage 130 but not the page itself, i.e., the HTML page. This has the advantage that the risk of displaying an old page is reduced.

Note that the pre-fetching is transparent to the user. He will notice that he receives a content item from storage since he receives it faster, but he need not make a special request to retrieve the pre-fetched content item.

Storage 130 may be configured with a transmitting device for transmitting stored content, whether transformed or not, to content rendering device 180. Although initiating the transmission would go through interceptor 140, the transmission of the content itself need not necessarily go through interceptor 140.

For example, storage 130 may comprise a web server for transmitting content using the http protocol to content rendering device 180. For example, storage 130 may comprise a RTSP server.

It is convenient, if a transmission protocol used by server 150 is also used by storage 130. For example, if the invention is used for pre-fetching of content available on server 150 using the http protocol, than conveniently, storage 130 is configured for transmitting content using the http protocol. Similarly, storage 130 may use RTSP, FTP, etc if such a protocol were employed by server 150.

If storage 130 is integrated with, e.g., interceptor 140, pre-fetcher 110, etc, it is possible to integrate the transmission device as well. This is not necessary though, storage 130 may comprise a file system, employing a separate transmission device, such as a web server. For example, the transmission device may be integrated but not the storage or vice versa.

An RTSP server may be used to stream video.

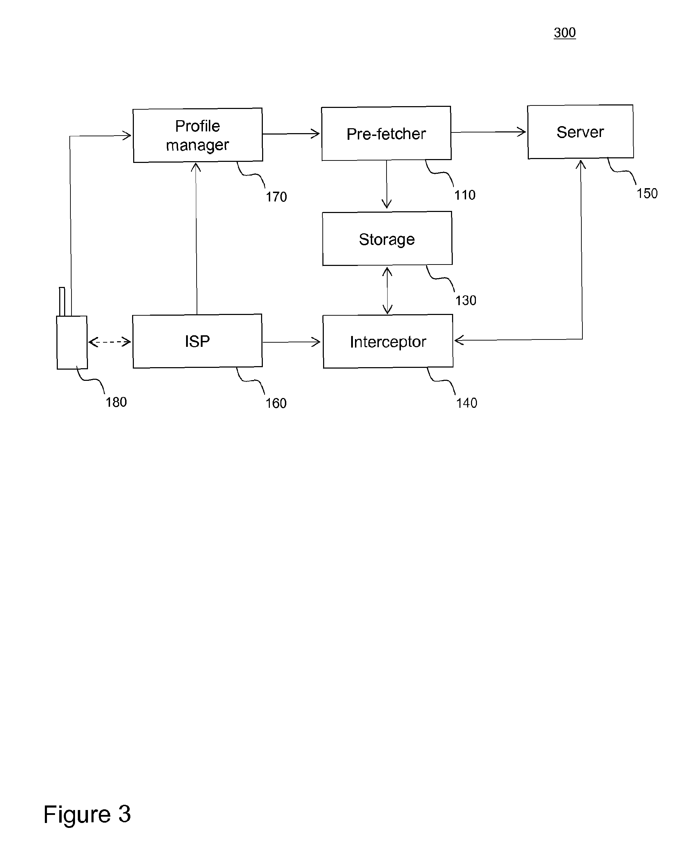

Figure 3 illustrates a pre-fetching system 300 in which the pre-processor 120 is omitted. Figure 3 illustrates that the pre-fetching solutions that work in system 100 may also be used in pre-fetching system 300, that is, without using a pre-processor. Accordingly, in system 300 content is not transformed before it is stored. A pre-fetcher for use in system 300 may also be used in system 100, i.e., as pre-fetcher 110; also a profile manager 170 for use in system 100 may also be used in system 300 and vice versa.

System 300 works similarly as system 100. A user profile is established by a profile manager. The user profile may be based on direct user input or on inferences based on an analysis of use-data (i.e. data mining). The use data may be log files detailing past browsing behavior done with content rendering device 180 and/or of the user associated with content rendering device 180. The use data may be obtained from various sources, for example, from content rendering device 180 or from ISP 160. The user profile is managed by profile manager 170. Pre-fetcher 110 obtains the user profile from profile manager 170 and pre-fetches content, e.g., in one of the ways indicated herein. The pre-fetched material, e.g., multimedia content, text material, data files etc, is stored on storage 130. When later content rendering device 180 is connected with ISP 160 for retrieval of content files, content rendering device 180 may request one or more of the content files which were previously pre-fetched. An interceptor 140 examines the requests which originated from content rendering device 180. If interceptor 140 determines that a request is being made for material which is stored on storage 130 it may retrieve the content from storage 130 and forward it to content rendering device 180. If interceptor 140 determines that the material is not available, it will allow the request to be processed as usual, i.e., forward the request to the server which stores the requested content, e.g., server 150. As part of completing the request the content may or may not be stored (i.e. cached) in storage 130. If interceptor 140 later receives a request for the content again, either from content rendering device 180 or from some other content rendering device, it may fulfill the request from storage 130.

Typically, interceptor 140 will fulfill a request from storage 130 if it is able. However, further conditions may have to be satisfied. For example, the user profile that is associated with content rendering device 180 may comprise an indication that any cached material must have been retrieved within some predetermined time limit, e.g., no earlier than in the past hour. Moreover, different indications are possible for different websites, servers, services and so on. For example, for a first website, say, a provider of movie clips, a user may want aggressive caching to minimize delay. The user would not expect any negative consequences of relying on stale data. The user may even indicate that cached data is always preferred above fresh data; For example, if in the experience of the user, clips are never changed, or only very infrequently. On the other hand for a second website, a user may want less aggressive caching, or no caching at all.

An advantage of system 300 is that bandwidth demands on the connection between pre-fetcher 110 and server 150 is reduced and/or better distributed in time. Content that is retrieved by pre-fetcher 110 is not bound by a time limit since it is not at this point in time requested by content rendering device 180. The retrieval of the content may take longer than would be acceptable if content rendering device 180 had just requested it. For example, pre-fetcher 110 may retrieve the content at times where the network traffic is low, whereas content rendering device 180 may request the content at times where the network traffic is high.

A better algorithm for pre-fetching content will result in a higher hit rate, i.e., a larger percentage of requested content, turns out to be content that was previously cached.

Figure 4 illustrates a pre-fetcher 110. Pre-fetcher 110 receives a user profile from profile manager 170. Pre-fetcher 110 is connectable to a server 150, typically over the Internet. Profile manager 170 forwards its results for further processing to a next device. Figure 4 shows pre-fetcher 110 connected to a pre-processor 120, however if no pre-processor is used pre-fetcher 110 may forward to a storage, e.g., storage 130, instead. The precise position of pre-fetcher 110 in the network may vary, for example, pre-fetcher 110 could be integrated with content rendering device 180, ISP 160, and/or profile manager 170 etc.

In this embodiment pre-fetcher 110 comprises a selector 410, a parser 420 and a retriever 430.

Selector 410 has access to the user profile associated with content rendering device 180. Selector 410 is configured to determine in dependency upon the user profile a server address and a query. For example, the user profile may comprise a URL, which may be used as a server address and a text string which may be used as query. The query may be associated specifically which the server address. The user profile may further comprise computer readable instruction for instructing selector 410 how to enter the query at the service provided by server 150.

Selector 410 is connected to server 150 over a data connection.

Selector 410 is further configured to provide the query to a search interface at the server address. In response to providing the query, server 150 provides a data file for retrieval. Selector 410 is configured to retrieve (or equivalently receive) that data file. Selector 410 comprises a data file retriever (not separately shown) for retrieving over a data connection a data file, in response to providing the query to the search interface.

For example, the user profile may comprise the web address of a movie clip database. At that URL, server 150 provides a search interface. Selector 410 enters the query at the search interface. In response, server 150 provides a data file (also referred to as a data page) comprising an index of search results in dependence upon the query. The data file is retrieved by selector 410. Typically, the data file comprises an html page configured for rendering the search results via a web browser. However, selector 410 will not forward the data page to a content rendering device, in particular, will not forward the data file to content rendering device 180. Although it is possible to store the data page in storage 130, and later provide a cached copy, it considered advantageous not to store the data page.

The data file retrieved by selector 410 from server 150 is forwarded to parser 420. Parser 420 parses the data file to select a content item and to obtain an address of the selected content item.

For example, the parser 420 may parse the data file to obtain all URLs that are comprised in the data file. A filtering operation may be done on the data file, for example, only URLs which link to media content, e.g., to a movie clip, as might be determined from an extension or MIME type may be retained.

If multiple URLs are retained, pre-fetcher 110 may continue with a subset, for example, the first few, say first 10 results, or with all results. Pre-fetcher 110 may also filter the results by cross-referencing storage 130. All content which has previously been cached, or which has been ached sufficiently recently, say in the past 24 hours, is not retained, i.e., removed from the list of content found by parser 420.

When a content item has been selected, the content is retrieved by retriever 430 from the address of the content item. The retrieval may be repeated for all or some of the content addresses found in the data file.

Pre-fetcher 110 may use multiple iterations to obtain addresses for content. For example, the data file may comprise addresses of further data files. Parser 420 may obtain an address of a further data file. The further data file may be retrieved by selector 410 and parsed by parser 420 for content. At this point, again addresses of data files could be identified instead of address of content, etc. Various measures may be taken to avoid the searching using multiple iterations to lead to potentially unwanted content. For example, the number of iterations may be limited, for example, to at most one 1 further iteration. That is only a total of two data files are parsed before content is found, or before this line of pre-fetching is abandoned. For example, selector 410 may be configured not to retrieve a further data file originating from a different server as the original data file.

Retriever 430 is configured for retrieving the selected content item in dependency upon the address of the selected content item.

For example, retriever 430 may receive a URL indicating the location of a content item, typically on server 150. Retriever 430 may retrieve the content item, and forward it to storage 130 for storage, possibly via pre-processor 120 for pre-processing. Retriever 430 may tag the content item with various information which is useful for interceptor 140; for example, the original size of the content item, the date and time of retrieval, the type of content and so on. The tag can be stored in storage 130 along with the content item.

Retriever 430 may comprise various specialized content retrieving devices, e.g. 'plug-ins'. For example, retriever 430 may comprise a plug-in for retrieving flash based content. The content may be recognized by the extension swf and/or by the type x-shockwave-flash. Retriever 430 may be configured to retrieve flash based content.

Retriever 430 and/or parser 420 may even contain plug-ins specialized in particular web sites. Some web-sites may offer their data files in formats which are configured for improved parsing. A plug-in may be provided in software, e.g., via a user profile.

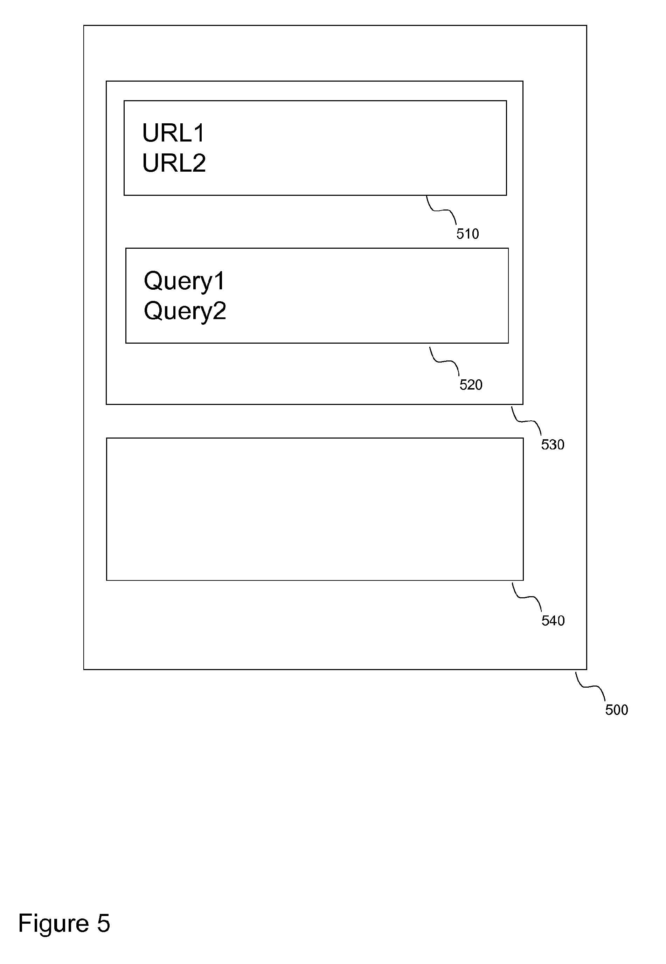

Figure 5 illustrates a user profile for use in the system 100 or 300.

The user profile shown in figure 5 comprises a first group of URLs 510, and a first group of queries 520. Group 510 and group 520 together from a URL-query combination 530. Group of URLs 510 is shown here with 2 URLs, but it may comprise a different number of URL's, e.g., a single URL or more than 2, e.g., 3, 4, etc. Group of queries 520 is shown here with 2 queries, but it may comprise a different number of queries e.g., a single query or more than 2, e.g., 3, at least 3, 4, etc. A group of queries may also be empty. In that case the corresponding URL's can be used without a query. This feature may be used for frequently changing top-level pages; e.g., news sites.

The user profile 500 shows a second URL-query combination 540. A user profile may comprise any number of URL-query combinations, e.g., 1, 2, at least 2, 3, at least 3, 4, etc.

The URLs in URLs 510 serve as server addresses, other possibilities are possible, for example, IP addresses. A query in Queries 520 may be a text string, e.g., a phrase or term.

For example, a user of content rendering device 180 who is interested in buying a new guitar may enter in his user profile, e.g., in Queries 520, the query "guitar" or more precisely "electric guitar". He may enter in URLs 510 the URL's of various popular auction sites. Alternatively, the user may use URLs which are most relevant for him, e.g., local auction sites.

The same user, who is also interested in antique cars, may enter in the queries field of 540 "Park Ward" and "Freestone and Webb", so that the queries field of combination 540 comprises two queries. The URLs field of combination 540 may comprise the address, e.g., URLs of various movie clip and image databases, in particular databases hosted on a website.

Furthermore, the user may set an indication that for combination 530, only cached results, which are cached within the last hour, are acceptable, but he may set no such limit for combination 540. For example, combination 530 may comprise a string such as "cache_limit:1" to indicate a limit of 1 hour.

As a result of a user profile like this pre-fetcher 110 may operate as follows. Selector 410 obtains the user profile and reads one of the URLs from 510, say URL1. At the indicated address, selector 410 enters Query1, say the query "electric guitar". As a result a data file is obtained. The data file is searched for content by parser 420. For example, parser 420 finds a reference to a jpeg image. The location of the image is forwarded to retriever 430. Retriever 430 retrieves the image.

Optionally, retriever 430 forwards the image to pre-processor 120 for pre-processing. For example, the resolution of the image may be reduced. The image is stored in storage 130.

If later the user continues his search for a guitar, he may use the service offered by URL1. He uses the search interface of URL1 to search for guitars which are for sale. Note that the user may use the same query as selector 410, i.e., Query1, but this is not necessary. Note that the user obtains a newly retrieved copy of the data file. The data file retrieved by selector 410 was not cached. It may therefore be the case that the data file obtained by the user is not identical to the one obtained by selector 410, even if they used the exact same query. However, it is likely that there is some overlap between the two. If the user requests a result that was previously cached in storage 130, then interceptor 140 will forward it to him, provided the cached copy is not too old.

Similarly, the user may later continue his research on pre-war cars. He is likely to find some of the same content that was previously found by selector 410 using the two queries. Note that data mining is a at a disadvantage here. For example, data mining could not predict that I will be searching for pre-war cars, whereas the user himself will be able to make such a prediction.

If a cached content item can be send to the user, bandwidth pressure on the network is reduced.

A use case is further described below.

A user may select applications for pre-fetching. For each application he can select a query, e.g. a search terms. A query may consist of one or more words, but may also comprise a more complicated search query written in a computer parsable search language; for example, a query may comprise a regular expression.

Different applications may use different queries. For example, in setting up his profile, a user may perform the following actions.
1. Entering one or more queries, e.g., search terms.
2. Selecting one or more applications, (e.g., Google, Youtube, Flickr, Marktplaats.nl, E-bay, nu.nl, Washington post, twitter, etc.)
3. Associating queries (in particular search terms) with applications. Note that some queries may be associated with multiple applications, and some applications may be associated with multiple queries.
4. Optionally entering other profile information, for example, such as described herein.

Note that the selected application may include different language applications. For example, a user may select a Chinese site, while his queries are English. In this case the pre-fetcher or the profile manager can invoke a translation device to translate the query. For example, an application and/or query may be tagged with a language tag to select a translation device in dependency thereupon.
Pre-fetcher 110, e.g., selector 410, may perform a so-called, 'GET' request to obtain the data file.

In one embodiment, Pre-fetcher 110, e.g., selector 410, poses as a browser, e.g., as a web-server client. For example, selector 410 may send messages to server 150 comprising a web-browser identification string. For example, selector 410 may response to cookie requests in a manner indicated by the server corresponding to the URL in the profile.

Alternatively, selector 410 may pose as an FTP client, in case server 150 is an FTP server.

One way to send a query to a server is to construct a URL comprising the query. An example of a constructed URL is given below. The example below is for a server 'Google', having server address http://www.google.nl/, and the search terms Bentley, classic, sale.

http://www.google.nl/search?hl=nl&source=hp&q=bentley+classic+sale&meta=&aq=f& aqi=&aql=&oq=&gs_rfai=

How a constructed URL is to be constructed may be obtained from the profile. It may also be obtained by sending a request to server 150. For example, selector 410 may send a request to server 150 without a query. In response an initial data file is obtained from server 150. The initial data file contains how queries are to be entered in the search interface.

A constructed URL may be constructed by inserting the search term into a template search query. For example, the URL given above may be modified by changing the string "bentley+classic+sale", by a different string representing different search terms. The template may be obtained from the profile. The template may be manually constructed for a website. Templates may be obtained from a database, for example, from a third party database accessible over the data network.

A constructed URL may however also be more complicated. For example, some server may not allow a simple substitution in a search query. For example, a constructed URL may work only temporarily. A solution in this case may be to emulate a web-browser more fully, and to parse the initial data file, for computer readable instructions on how to enter a query at the search engine, e.g., on how to construct the constructed URL.

How a search query is to be sent to a particular application may be obtained from examining the source pages of the respective application. For example, if the initial data file is an http file, it may contain http instructions such as 'input type="text"' or 'textarea' to indicate input areas. It may also contain http instructions such as 'input type="submit"'

For example, the search interface may be arranged such that the query must be entered in a different way for each new query. For example, the initial data file may contain a unique number (nonce) which must be part of the constructed URL. The selector may obtain the different way from the initial data file and construct the URL accordingly. For example, obtain the nonce from the initial data file inserted at the appropriate place in the constructed URL. Typically, a server using this system will reject URLs which are not constructed according to this system, or which contain a nonce which is too old. A similar system may be set up using cookies.

In a further embodiment, the application may offer an Application programming interface (API) for entering a query at the search interface, which simplifies the process of entering the query.

The pre-fetcher will support at least one 'basic query entry method' for each application it supports. However, the basic query entry method need not be the same for all applications. For example, some applications may offer an API, some will allow insertion or substitution in their queries, and some will require emulating a web-browser.

Although a query is listed in the profile only once, it may be used for multiple applications. For example, the selector 410 may also construct a U RL for a second application, say e-bay, based on the same query Bentley, classic, sale. Once the single query is changed, the pre-fetching of multiple applications is affected.

The pre-fetcher may be developed using such general purpose languages such as Visual Basic, C, a database, such as SQL, and the like.

A user may change the queries in his user profile, for example, through a web interface to the profile manager. The pre-fetcher 110 will change the queries he enters in the search interface.
Pre-fetcher 110 may occasionally flush the storage, e.g., according to a schedule, or in dependency upon the remaining capacity of the storage. If a query is changed or removed, the content which was pre-fetched in response to it may also be removed, i.e., flushed.

Content rendering device 180 may comprise a tablet, a netbook, a Smartphone etc.

After receiving a data file in response to entering the query at the search interface, the data file may be parsed for locations of content.

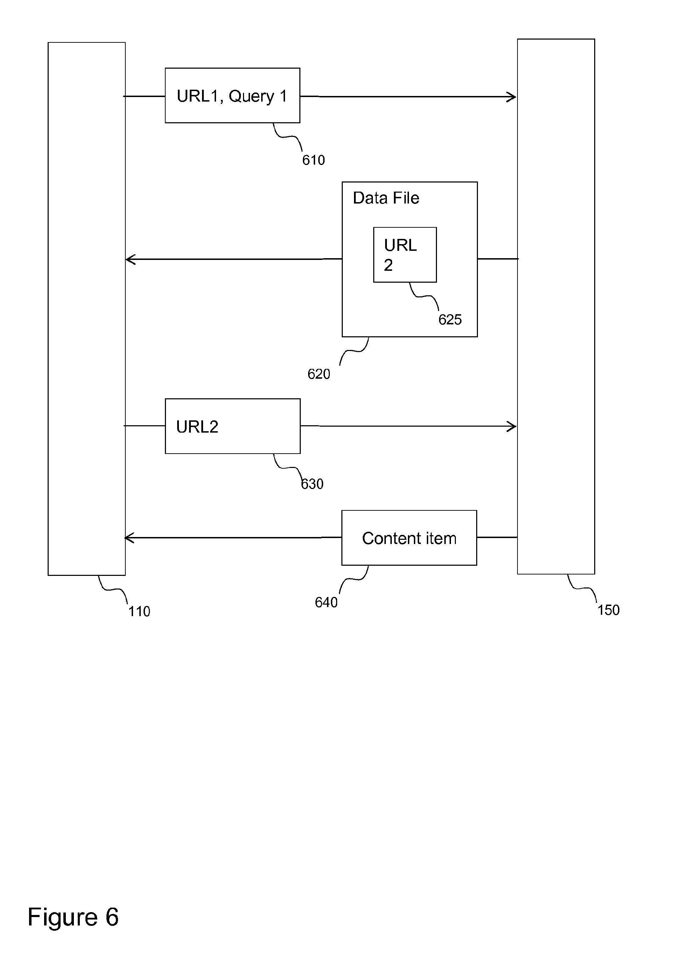

Figure 6 illustrates a possible sequence of messages exchanged between a pre-fetcher 100 and a server 150. Time is illustrated on the vertical axis, with messages nearer the top of the pages being earlier in time.

Pre-fetcher 110 sends a message 610 comprising a first query (Query1 ) to server 150, indicated by a server address (URL1). The way in which these two information items are sent may depend on the type of server 150. For example, pre-fetcher 110 may use the service of an intermediate broker, who receives message 610 and formats the request in a way acceptable to server 150.

In response to the query, server 150 sends a data file 620. Data file contains a second URL 625 (URL2) in some way. Pre-fetcher 110 receives data file 620 and obtains URL2 from it. In response a request is made for URL2 in message 630. Finally, server 150 sends the content item to pre-fetcher 110.

If later the user requests URL2, then this is intercepted by interceptor 140, and in response a cached version of the content item is sent the user. If later the user requests URL1, then this is not intercepted by interceptor 140, and in response a new copy of the data file is obtained from server 150.

Note that many web services have configured their web sites such that the URL which is sent to server 150 in response to a query in not always the same.

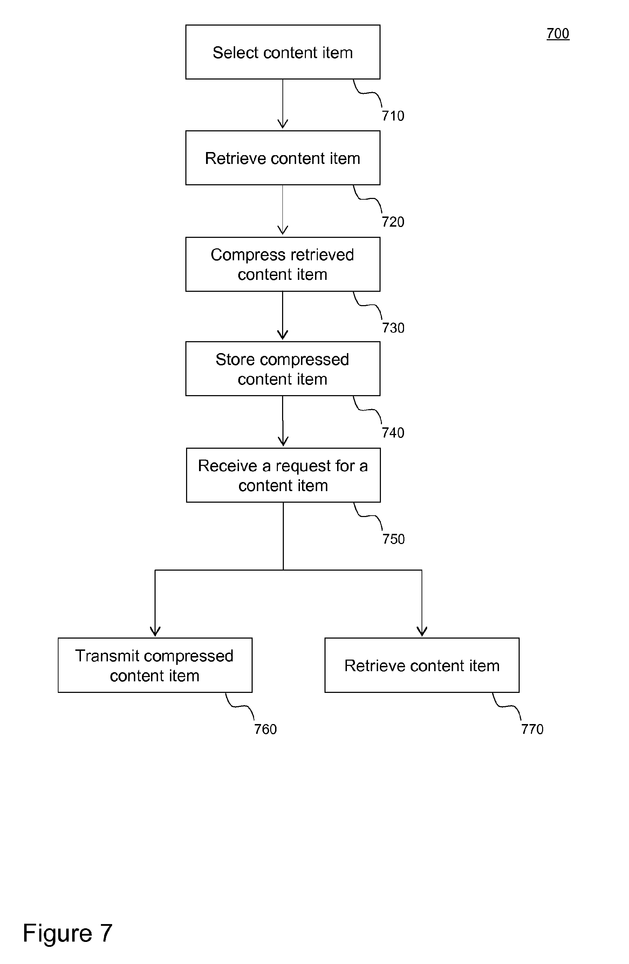

Figure 7 illustrates method for pre-fetching content 700 according to the invention. A possible order of the steps is indicated by arrows.

The method 700 comprises selecting 710 of a content item in dependency on a user profile. For example, the method may retrieve the user profile from a user profile manager, e.g., a storage device comprised in profile manager 170. For example, a URL of the content item may be comprised in the user profile. For example, a URL of a top level page may be comprised in the user profile. In the latter case, selecting the content item may comprise: submitting the URL to a server 150; retrieving a data file, e.g., a html page using the http protocol; parsing the retrieved data file for links to embedded content; and selecting the content item from the embedded content. Method 700 further comprises retrieving 720 over a data connection said selected content item from a content server. The retrieving may use the http protocol over a data network.

After the content item has been retrieved the method comprises transforming 730 said retrieved content item by applying a content processing algorithm. For example, the retrieved content item is scaled up. The term "upscaling" means increasing the resolution or the frame rate of a video sequence or still image. For example, a video clip that was encoded in 640 × 480 may be "upscaled" to 720 × 576. For example, the upscaling may be based on algorithms that calculate by extrapolation the intermediate missing pixels missing, thus reducing pixelation.

Alternatively, or in addition the transforming step may comprise transforming said retrieved content item into a compressed content item having a smaller storage space requirement than the retrieved content item. For example, the image may be compressed by reducing resolution.

The method further comprises, storing 740 the transformed content item for later transmission to a content rendering device associated with the user profile in response to receiving a request from the content rendering device for the content item.

The method further comprises receiving 750 a request from the content rendering device for the content item.

In practice it may happen that requests are received for content items that were not previously pre-fetched. In that case a step 770 of retrieving the requested content item may be performed, e.g., followed by transmitting the requested content item to device who made request, i.e., content rendering device 180.

On the other hand the user may request a content item that was pre-fetched. In response to such a request, the method will be transmitting 760 the transformed content item to the content rendering device.

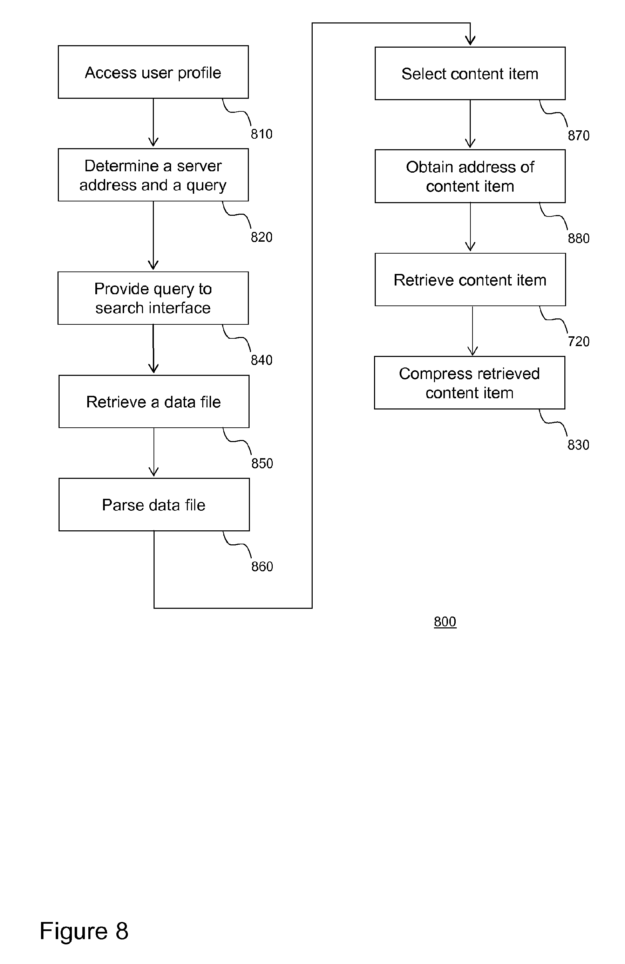

Figure 8 illustrates a method 800 of pre-fetching content according to the invention, a possible sequence of method steps is given in the diagram.

Method 800 comprises accessing 810 a user profile. The user profile may be obtained from various sources, e.g., it may be locally stored, or it may be obtained from a different computer, or from a user. Method 800 further comprises determining 820 a server address and a query in dependence upon the user profile. Method 800 further comprises providing 840 the query to a search interface of a server indicated by the server address. Method 800 further comprises retrieving 850 a data file in response to providing the query, typically the data file will be retrieved from the server indicated by the server address, but the data file may also be obtained from a different source, for example, if the server so indicates. Method 800 further comprises parsing 860 the data file. The data file is parsed, to find content items which are likely to be retrieved later by a user associated with the user profile. Method 800 further comprises selecting 870 a content item and obtaining 880 the address of selected content item. The content item is selected in dependency upon the data file. For example, the data file may comprise a content address. The data file may also provide the content address indirectly, for example, via a further data file, the address of which is comprised in the data file. Method 800 further comprises, retrieving 720 the content item from the obtained address of the content item. Optionally, the retrieved content item may be processed, e.g., compressed 830. Typically, the content item will be retrieved from the same server, i.e., from server 150, this is not necessary though.

Many different ways of executing methods 700 and 800 are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 730 and 740 may be executed, at least partially, in parallel. Moreover, a given step may not have finished completely before a next step is started.

A method according to the invention may be executed using software, which comprises instructions for causing a processor system to perform method 700 or 800. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example, processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Furthermore, the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A pre-fetching system (100;300) for pre-fetching content comprising
- a content selector (210; 410, 420) for selecting a content item in dependency on a user profile,
- a content retriever (110; 220; 430) for retrieving over a data connection said selected content item from a content server, and
- a storage device (130) for storing the content item for later transmission to a content rendering device (180) associated with the user profile in response to receiving a request from the content rendering device for the content item, wherein the content selector comprises
- a data selector (410) for determining in dependency upon the user profile a server address and a query,
- a data file retriever (410) for retrieving over a data connection a data file, in response to providing the query to a search interface at the server address, and
- a parser for parsing (420) said retrieved data file to select said selected content item and to obtain an address of the selected content item,
- the content retriever (430) being configured for retrieving the selected content item in dependency upon the address of the selected content item.

2. A pre-fetching system as in Claim 1, comprising
- an interceptor (160) for receiving a request from the content rendering device for the content item and in response transmitting the stored content item to the content rendering device.

3. A pre-fetching system as in any one of the preceding claims, wherein
- the user profile comprises a group of server addresses, comprising at least one server address and a group of queries, comprising at least one query, and
- determining in dependency upon the user profile a server address and a query comprising selecting a server address from the group of server addresses and a query from the group of queries.

4. A pre-fetching system for pre-fetching content as in any one of the preceding claims,
- a preprocessor for transforming said retrieved content item by applying a content processing algorithm, and
- wherein the storage device is configured for storing said transformed content item for later transmission to the content rendering device associated with the user profile in response to receiving a request from the content rendering device for the content item.

5. A pre-fetching system as in Claim 4, wherein the preprocessor is configured for transforming the retrieved content item into a content item having a smaller storage space requirement than the retrieved content item by applying a content compression algorithm.

6. A pre-fetching system as in claim 5, wherein the retrieved content item comprises a compressed video, the compressed video being compressed according to a first compression format, and wherein the transforming of the retrieved content item comprises recompressing the compressed video to obtain the compressed content item comprising a compressed video being compressed according to a second compression format.

7. A pre-fetching system as in claim 2 and 4, wherein the interceptor is configured for transmitting the compressed content item to the content rendering device over a wireless data connection.

8. A pre-fetching system as in any one of the preceding claims, wherein the content rendering device is a mobile phone.

9. A pre-fetching system as in any one of the preceding claims, comprising a profile manager, the profile manager being configured with a digital user interface for receiving from a user the user profile associated with the content rendering device (180).

10. A method for pre-fetching content, the method comprising
- selecting a content item in dependency on a user profile,
- retrieving over a data connection said selected content item from a content server, and
- storing said retrieved content item on a storage for later transmission to a content rendering device associated with the user profile in response to receiving a request from the content rendering device for the content item, wherein selecting a content item comprises
- determining in dependency upon the user profile a server address and a query,
- retrieving over a data connection a data file, in response to providing the query to a search interface at the server address, and
- parsing said retrieved data file to select said selected content item and to obtain an address of the selected content item, wherein
- retrieving over a data connection said selected content item is in dependency upon the address of the selected content item.

11. A method for pre-fetching content as in claim 10, further comprising
- receiving a request from the content rendering device for the content item and in response transmitting the content item from the storage to the content rendering device.

12. A computer program comprising computer program code means adapted to perform all the steps of any one of claims 10 and 11 when the computer program is run on a computer.

13. A computer program as claimed in claim 12 embodied on a computer readable medium.
